# EUROPEAN PATENT APPLICATION

(11) **EP 4 803 733 A1**
(43) Date of publication of application: **09.09.2026**
(21) Application number: 26155888.6
(22) Date of filing: 03.02.2026
(51) Int. Cl.: F02C 7/22

(54) **FUEL SYSTEM FOR GAS TURBINE ENGINE AND METHOD OF REMOVING WATER FROM FUEL FILTER OF GAS TURBINE ENGINE**

(30) Priority: 03.03.2025 GB 202503005
(71) Applicant: Rolls-Royce plc, London N1 9FX (GB)
(72) Inventor: Ferra, Paul, Derby, DE24 8BJ (GB)
(74) Representative: Rolls-Royce plc

(57) **Abstract**

A fuel system (100) for a gas turbine engine (10) includes a fuel pump (106, 114), and a fuel supply line (104) configured to supply fuel to the fuel pump (106, 114). The fuel system (100) also includes a fuel filter (108) disposed downstream of the fuel pump (106, 114). The fuel filter (108) includes a filter housing (118) and a filter media (120). The fuel filter (108) is configured to receive a flow of fuel from the fuel pump (106, 114) and to deliver filtered fuel towards a combustion chamber (16) of the gas turbine engine (10) via a fuel filter outlet (130). The fuel system (100) further includes a fuel recirculation line (110) that fluidly connects the fuel filter (108) with the fuel pump (106, 114). The fuel recirculation line (110) is configured to recirculate a portion of the fuel received by the fuel filter (108) towards the fuel pump (106, 114) based on a pressure difference between a fuel pressure in the filter housing (118) and the fuel supply line (104).

## Description

### FIELD OF THE DISCLOSURE

This disclosure relates generally to a fuel system for a gas turbine engine and a method of removing water from a fuel filter of the gas turbine engine.

### BACKGROUND

In gas turbine engines, aviation fuel plays a critical role in engine operation. While typically kerosene-based, aviation fuel may contain a small fraction of water, which is permissible and expected within certain limits. A fuel system is associated with the gas turbine engine to supply the aviation fuel to the gas turbine engine. Over time, a fuel filter, particularly the Main Engine Fuel Filter (MEFF) of the fuel system, separates this water from the fuel. The fuel filter is configured to filter the fuel of solid contaminants. A side-effect of this is that it may additionally separate water and/or other unwanted liquid contaminants from the fuel. The separated water may collect in the filter housing due to water's higher density compared to kerosene.

The MEFF is a component located downstream of a fuel pump of the fuel system and upstream of a Fuel Metering Unit (FMU) of the fuel system. A primary function of the MEFF is to protect the FMU and other downstream components from solid contaminants, such as minerals, dirt, and ice. The accumulated water in the MEFF has the potential to be flushed downstream of a filter media of the MEFF. The fuel system is designed to tolerate a level of water contamination however if this water turns to ice, this may present a threat to the gas turbine engine. Specifically, under certain operational conditions, such as low temperatures at high altitudes, water present in the aviation fuel may partially freeze, causing a blockage of downstream fuel system components. This is particularly concerning during critical flight conditions when rapid engine acceleration is required. Such a blockage due to ice formation may reduce engine power, thereby preventing the engine from accelerating as needed. This situation, known as "Loss of Thrust Control" (LOTC), is undesirable and may compromise operational safety.

Conventionally, some fuel filters are equipped with a drain valve and/or a sight glass that may allow a removal of any water that builds up therein. For instance, certain diesel engine fuel systems used in construction equipment have such features. However, this approach may not be practical for aircraft engines.

### SUMMARY OF THE DISCLOSURE

In a first aspect, there is provided a fuel system for a gas turbine engine. The fuel system includes a fuel pump. The fuel system further includes a fuel supply line configured to supply fuel to the fuel pump. The fuel system further includes a fuel filter disposed downstream of the fuel pump. The fuel filter includes a filter housing and a filter media. The fuel filter is configured to receive a flow of fuel from the fuel pump and to deliver filtered fuel towards a combustion chamber of the gas turbine engine via a fuel filter outlet. The fuel system further includes a fuel recirculation line that fluidly connects the fuel filter with the fuel pump. The fuel recirculation line is configured to recirculate a portion of the fuel received by the fuel filter towards the fuel pump based on a pressure difference between a fuel pressure in the filter housing and the fuel supply line.

The fuel recirculation line of the present disclosure may advantageously prevent accumulation of water in the filter housing. The fuel recirculation line may prevent water from accumulating at the bottom of the filter housing by redirecting fuel accumulated within the filter housing back into fuel flow entering the fuel pump, thereby effectively flushing out any fuel or water accumulated within the filter housing. Further, the fuel recirculation line may also eliminate a requirement of regular maintenance action of checking for and/or draining water from the fuel filter. The recirculated fuel and/or water may mix with incoming fuel in the fuel pump, rather than being directed back to a fuel tank.

The recirculation of the portion of the fuel may prevent a flushing of water downstream of the filter media of the fuel filter. The recirculation of the portion of the fuel may mitigate against a build-up of water within the fuel filter, which may in turn reduce a risk of blockage in the downstream fuel system components due to formation of ice or slush if the temperature of the fuel comprising water reduces. Thus, in an event of a sudden reduction in fuel temperature to sub-zero, a risk of ice formation in components present downstream of the fuel filter may be minimized, thereby preventing blockage of downstream components. Further, the recirculation of the portion of the fuel may prevent a reduction in engine power and may allow acceleration of the gas turbine engine as needed. Furthermore, the recirculation of the portion of the fuel may reduce a probability of situations, such as "Loss of Thrust Control" (LOTC).

A flow restrictor may be disposed in the fuel recirculation line. The flow restrictor is configured to control the portion of the fuel recirculated towards an inlet of the fuel pump. The flow restrictor is designed to ensure that a performance of the fuel pump is not compromised upon incorporation of the flow restrictor. while ensuring that the gas turbine engine receives a consistent and optimal fuel supply.

The flow restrictor may have a minimum size greater than a maximum pore size of the filter media. The flow restrictor having the minimum size greater than the maximum pore size of the filter media may ensure that the flow restrictor does not get blocked or clogged. The minimum size of the flow restrictor may be decided to ensure that a performance of the fuel pump is not compromised.

The flow restrictor may have a minimum size greater than a maximum likely particulate size within the fuel. The flow restrictor having the minimum size greater than the maximum likely particulate size within the fuel may ensure that the flow restrictor does not get blocked or clogged in the event that it is provided with unfiltered fuel. The maximum likely particulate size may be defined by a specification of the fuel contamination as defined by regulation, industry best practice and the airframer. The maximum likely particulate size may be defined by a specification of the fuel approved for use in the aircraft and the gas turbine engine. The maximum likely particulate size may be 1500 micrometres (0.0015 metres).

The fuel recirculation line may be a pipe. The pipe may provide a durable, a reliable, and an efficient pathway for the fuel to flow back towards the fuel pump. The pipe may be made of a material that is resistant to wear and corrosion, thereby ensuring a long-lasting and stable solution for fuel circulation. Additionally, the pipe may be designed to handle pressure conditions and temperature conditions prevailing within the fuel system, while maintaining consistent fuel flow without risk of leakages or blockages.

The fuel recirculated towards the fuel pump may mix with incoming fuel being received from the fuel supply line.

A first end of the fuel recirculation line may be coupled with the fuel pump, or the fuel supply line proximal to an inlet of the fuel pump. This feature may allow the recirculated fuel to mix with the incoming fuel being received from the fuel supply line.

A second end of the fuel recirculation line may be coupled with a location of the filter housing that is proximal to a stagnant or quiescent fuel flow field within the filter housing. The second end of the fuel recirculation line may be connected at a location where there is a risk of water accumulation. Typically, this may be at a lowest point of the filter housing. The fuel recirculation line may prevent accumulation of fuel or water in the filter housing as it is continually flushed.

The stagnant or quiescent fuel flow field within the filter housing may be downstream of the filter media and upstream of the fuel filter outlet.

The second end of the fuel recirculation line may be coupled with the filter housing proximal to a bottom end of the filter housing. In this way, fuel and/or water may not accumulate in the filter housing as it may be continually flushed.

The fuel pump may be a low-pressure fuel pump or a main engine fuel pump disposed downstream of the low-pressure fuel pump. Specifically, the fuel recirculation line may be associated with any one of the low-pressure fuel pump and the main engine fuel pump based on a location of the fuel filter. The positioning of the main engine fuel pump downstream of the fuel pump and upstream of a fuel metering unit may ensure a steady, a consistent, and an adequately pressurized fuel supply to the gas turbine engine, which may enhance fuel control, a combustion efficiency, and an overall engine performance. **It** may also provide safety benefits, reduce a risk of contamination and damage, and help improve the reliability, longevity, and the efficiency of the fuel system.

A fuel metering unit may be disposed downstream of the filter housing. As the fuel metering unit may contain sensitive components, it is desirable that only filtered fuel is provided to the fuel metering unit. This may further lead to an efficient engine performance, an enhanced reliability, and a longer service life for critical fuel system components.

The fuel may contain water. The water content in the fuel may be quite low. For example, the water content in the fuel may be around 300 parts per million. In some temporary cases though, (for example, due to upstream reconfiguration of fuel supply), the water content in the fuel delivered from the aircraft to the gas turbine engine may be temporarily higher, for example, an order of magnitude higher.

The water may include dissolved water and/or free water droplets. The dissolved water in the fuel system may be the water mixed at a molecular level within the fuel, while the free water droplets may be the water that may exist as a separate phase, for example may be suspended in the fuel.

In a second aspect, there is provided a method of preventing a build-up of water within fuel filtered by a fuel filter of a gas turbine engine. The method includes operating a fuel system of the gas turbine engine. The fuel system includes a fuel pump, a fuel supply line configured to supply fuel to the fuel pump, and the fuel filter disposed downstream of the fuel pump. The method further includes receiving, within a filter housing of the fuel filter, a flow of fuel from the fuel pump. The fuel contains water. The method further includes separating, by a filter media of the fuel filter, water from the fuel received within the fuel filter. The method further includes collecting the water separated from the fuel within the filter housing. The method further includes recirculating, by a fuel recirculation line that fluidly connects the fuel filter with the fuel pump, a portion of the fuel within the filter housing towards the fuel pump, based on a pressure difference between a fuel pressure in the filter housing and the fuel supply line.

The method of the present disclosure may advantageously prevent accumulation of water in the filter housing. The method may prevent water from accumulating at the bottom of the filter housing by redirecting fuel accumulated within the filter housing back into the fuel flow entering the fuel pump, thereby effectively flushing out any fuel or water accumulated within the filter housing. Further, the method may also eliminate a requirement of regular maintenance action of checking for and/or draining water from the fuel filter. The recirculated fuel and/or water may mix with incoming fuel in the fuel pump, rather than being directed back to a fuel tank.

The recirculation of the portion of the fuel according to the method may prevent a flushing of water downstream of the filter media of the fuel filter. The recirculation of the portion of the fuel may mitigate against a build-up of water within the fuel filter, which may in turn reduce a risk of blockage in the downstream fuel system components due to formation of ice or slush if the temperature of the fuel comprising water reduces. Thus, in an event of a sudden reduction in fuel temperature to sub-zero, a risk of ice formation in components present downstream of the fuel filter may be minimized, thereby preventing blockage of downstream components. Further, the recirculation of the portion of the fuel may prevent a reduction in engine power and may allow acceleration of the gas turbine engine as needed. Furthermore, the recirculation of the portion of the fuel may reduce a probability of situations, such as "Loss of Thrust Control" (LOTC).

The method may further include controlling, by a flow restrictor disposed in the fuel recirculation line, the portion of the fuel recirculated towards an inlet of the fuel pump. The flow restrictor may be designed (sized) to ensure that a performance of the fuel pump is not compromised upon incorporation of the flow restrictor. The flow restrictor used in the method of the present disclosure may have the minimum size greater than a maximum pore size of the filter media such that this may ensure that the flow restrictor does not get blocked or clogged. Further, the flow restrictor may have a minimum size greater than a maximum likely particulate size within the fuel to ensure that the flow restrictor does not get blocked or clogged in the event that it is provided with unfiltered fuel. The maximum likely particulate size may be defined by a specification of the fuel contamination as defined by regulation, industry best practice and the airframer. The maximum likely particulate size may be defined by a specification of the fuel contamination as defined by regulation, industry best practice and the airframer. The maximum likely particulate size may be 1500 micrometres (0.0015 metres). The minimum size of the flow restrictor may be decided to ensure that a performance of the fuel pump is not compromised.

The method may further include causing the fuel that is recirculated towards the fuel pump to mix with incoming fuel being received from the fuel supply line.

The method may further include coupling a first end of the fuel recirculation line with the fuel pump, or the fuel supply line proximal to an inlet of the fuel pump. This feature may allow the recirculated fuel to mix with the incoming fuel being received from the fuel supply line.

The method may further include coupling a second end of the fuel recirculation line with a location of the filter housing that is proximal to a stagnant or quiescent fuel flow field within the filter housing. The stagnant or quiescent fuel flow field within the filter housing is downstream of the filter media and upstream of the fuel filter outlet. The second end of the fuel recirculation line may be connected at a location where there is a risk of water accumulation. Typically, this may be at a lowest point of the filter housing. The fuel recirculation line may prevent accumulation of fuel or water in the filter housing as it is continually flushed.

The method may further include coupling the second end of the fuel recirculation line with the filter housing proximal to a bottom end of the filter housing. In this way, fuel and/or water may not accumulate in the filter housing as it may be continually flushed.

### BRIEF DESCRIPTION OF THE DRAWINGS

Examples will now be described by way of example only with reference to the accompanying drawings, in which:
**FIG. 1** shows a schematic side view of a gas turbine engine, in accordance with an example of the present disclosure;
**FIG. 2** shows a schematic view of a fuel system for the gas turbine engine of **FIG. 1****,** in accordance with an example of the present disclosure;
**FIG. 3** shows a schematic view of a fuel filter and a low-pressure fuel pump of the fuel system of **FIG. 2****,** in accordance with an example of the present disclosure; and
**FIG. 4** shows a flowchart depicting various steps of a method of preventing a build-up of water within fuel filtered by a fuel filter of the gas turbine engine of **FIG. 1****,** in accordance with an example of the present disclosure.

### DETAILED DESCRIPTION

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

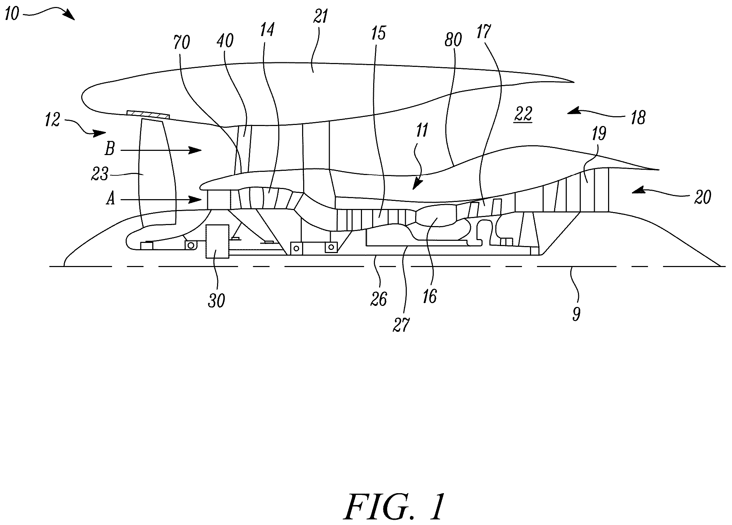

**FIG. 1** shows a schematic side view of a gas turbine engine 10 having a principal rotational axis 9. The gas turbine engine 10 includes an air intake 12 and a fan 23 that generates two airflows: a core airflow A and a bypass airflow B. The gas turbine engine 10 includes an engine core 11 that receives the core airflow A. In other words, the core airflow A enters the engine core 11. The fan 23 is located upstream of the engine core 11. The fan 23 includes a plurality of blades (not shown) that upon rotating, generates the core airflow A and the bypass airflow B.

The engine core 11 includes, in axial flow series, a compressor 14, 15, a combustion chamber 16, and a turbine 17, 19. Specifically, the engine core 11 includes, in axial flow series, a low-pressure compressor 14, a high-pressure compressor 15, a combustion chamber 16, a high-pressure turbine 17, a low-pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22 surrounding the engine core 11. The bypass airflow B flows through the bypass duct 22 to provide propulsive thrust, where it is straightened by a row of outer guide vanes 40 before exiting the bypass exhaust nozzle 18. The outer guide vanes 40 extend radially outwardly from an inner ring 70 which defines a radially inner surface of the bypass duct 22. Rearward of the outer guide vanes 40, the engine core 11 is surrounded by an inner cowl 80 which provides an aerodynamic fairing defining an inner surface of the bypass duct 22. The inner cowl 80 is rearwards of and axially spaced from the inner ring 70. The inner ring 70 defines the inner surface of the bypass duct 22. The fan 23 is attached to and driven by the low-pressure turbine 19. In some examples, the fan 23 may be driven by the low-pressure turbine 19 via a shaft 26 and an epicyclic gearbox 30.

In use, the core airflow A is accelerated and compressed by the low-pressure compressor 14 and directed into the high-pressure compressor 15 where further compression takes place. The compressed air exhausted from the high-pressure compressor 15 is directed into the combustion chamber 16 where it is mixed with fuel and the mixture is combusted. The resultant hot combustion products then expand through, and thereby drive, the high pressure and low-pressure turbines 17, 19 before being exhausted through the core exhaust nozzle 20 to provide some propulsive thrust. A core shaft 27 connects the turbine 17, 19 to the compressor 14, 15. Specifically, the high-pressure turbine 17 drives the high-pressure compressor 15 by the suitable core shaft 27 or an interconnecting shaft. The fan 23 generally provides most of the propulsive thrust. The epicyclic gearbox 30 may be a reduction gearbox. However, the gas turbine engine 10 may omit the epicyclic gearbox 30, and may have a different engine turbomachinery, without any limitations.

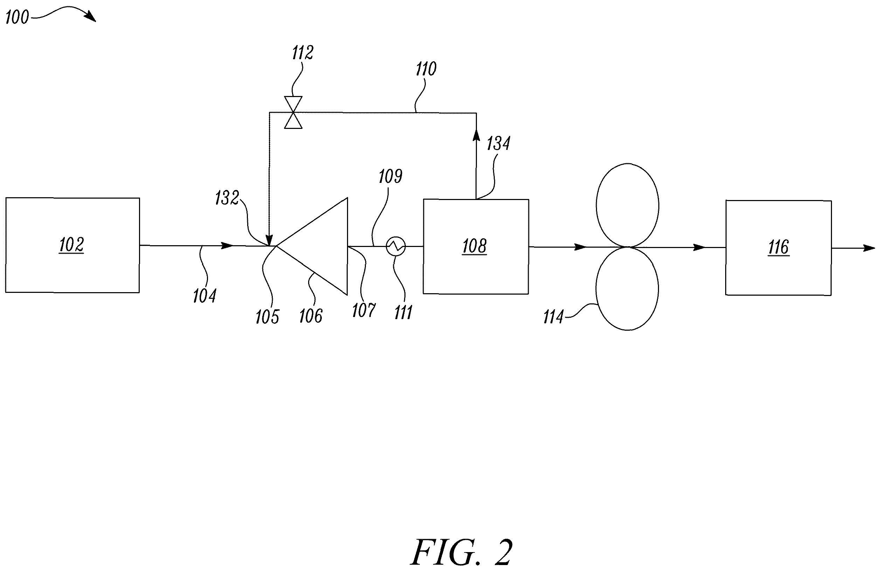

**FIG. 2** shows a schematic view of a fuel system 100 for the gas turbine engine 10 of **FIG. 1****.** A fuel tank 102 is disposed in an aircraft. The fuel tank 102 stores the fuel, typically a fossil-based hydrocarbon fuel, such as kerosene, which is configured to be supplied to the gas turbine engine 10. As an example, the fuel may contain molecules from one or more chemical families of n-alkanes, iso-alkanes, cycloalkanes, and aromatics. As another example, the fuel may contain renewable hydrocarbons produced from biological or non-biological resources, otherwise known as sustainable aviation fuel (SAF). In each of the provided examples, the fuel may include one or more trace elements including, for example, sulphur, nitrogen, oxygen, inorganics, and metals. The fuel further may comprise water. The water, if present, may include dissolved water and/or free water droplets. In some examples, the fuel may contain up to 1% of water. The water content in the fuel may be quite low. In some examples, the water content in the fuel may be around 300 parts per million. In some temporary cases though, (for example, due to upstream reconfiguration of fuel supply), the water content in the fuel delivered from the aircraft to the gas turbine engine may be temporarily higher, for example, an order of magnitude higher. It should be noted that the present disclosure is not limited to an amount of water that can be present in the fuel or that can be handled by the fuel system 100. The dissolved water in the fuel system 100 may be water mixed at a molecular level within the fuel, while the free water droplets may be the water that may exist as a separate phase, for example may be suspended in the fuel.

The fuel system 100 further includes a fuel supply line 104. The fuel supply line 104 is configured to connect the fuel tank 102 to the fuel system 100. As an example, the fuel supply line 104 may be a pipe made from a durable material that may withstand high pressure, temperature variations, and corrosive properties of the fuel.

The fuel system 100 further includes a fuel pump 106, 114. The pump 106 is a low-pressure fuel pump 106 herein. The fuel pump 106 may be hereinafter interchangeably referred to as "the low-pressure fuel pump 106". Alternatively, the fuel pump 114 may be a main engine fuel pump 114 disposed downstream of the low-pressure fuel pump 106. Further, the fuel pump 114 may be hereinafter interchangeably referred to as "the main engine fuel pump 114". The fuel supply line 104 is configured to supply fuel to the low-pressure fuel pump 106. The low-pressure fuel pump 106 receives fuel from the fuel tank 102 via the fuel supply line 104. In other words, the fuel supply line 104 carries the fuel under low-pressure initially, from the fuel tank 102 to the low-pressure fuel pump 106, which may operate at lower pressure of around 2 to 10 pound-force per square inch (PSI). The low-pressure fuel pump 106 includes an inlet 105 and an outlet 107, such that the fuel from the fuel supply line 104 enters the low-pressure fuel pump 106 via the inlet 105 and exits the low-pressure fuel pump 106 via the outlet 107.

The fuel system 100 further includes a fuel filter 108 disposed downstream of the low-pressure fuel pump 106. The fuel filter 108 is configured to receive a flow of fuel from the low-pressure fuel pump 106 and to deliver filtered fuel towards the combustion chamber 16 (see **FIG. 1**) of the gas turbine engine 10 via a fuel filter outlet 130. The low-pressure fuel pump 106 is in fluid communication with the fuel filter 108 via a fuel line 109.

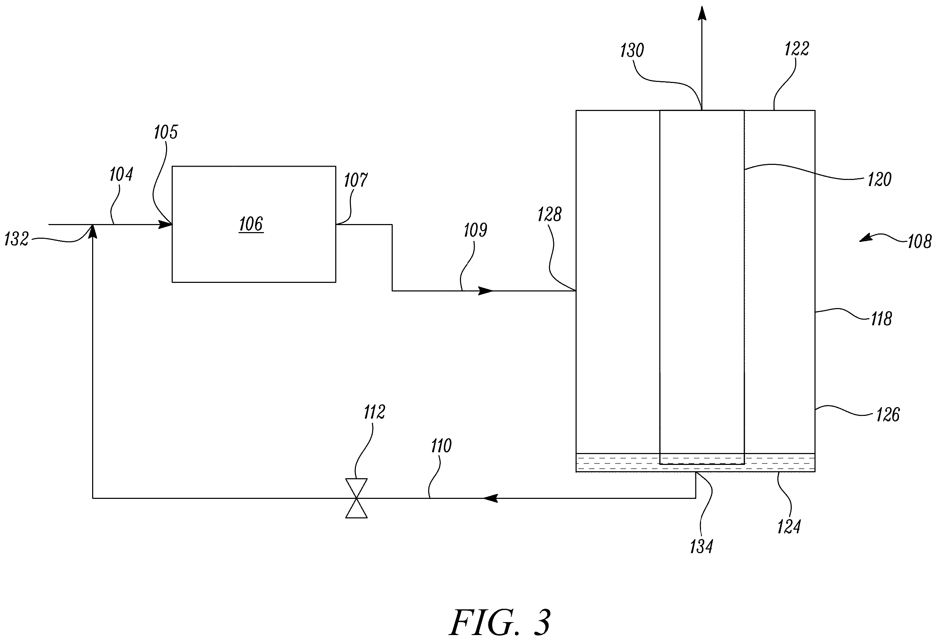

The fuel system 100 further includes a fuel recirculation line 110 that fluidly connects the fuel filter 108 with the low-pressure fuel pump 106. The fuel recirculation line 110 is configured to recirculate a portion of the fuel received by the fuel filter 108 towards the low-pressure fuel pump 106 based on a pressure difference between a fuel pressure in a filter housing 118 (see **FIG. 3**) and the fuel supply line 104. It should be noted that the portion of the fuel that is recirculated by the fuel recirculation line 110 is fuel that is collected within the filter housing 118. The fuel recirculated towards the low-pressure fuel pump 106 mixes with incoming fuel being received from the fuel supply line 104. The fuel recirculation line 110 has a first end 132 and a second end 134.

In an example, the fuel recirculation line 110 is a pipe. The pipe may provide a durable, a reliable, and an efficient pathway for the fuel to flow back towards the low-pressure fuel pump 106. The pipe may be made of a material that is resistant to wear and corrosion, thereby ensuring a long-lasting and stable solution for fuel circulation. Additionally, the pipe may be designed to handle pressure conditions and temperature conditions prevailing within the fuel system 100, while maintaining consistent fuel flow without risk of leakages or blockages.

Further, the fuel system includes a flow restrictor 112 disposed in the fuel recirculation line 110. The portion of the fuel being recirculated from the fuel filter 108 passes through the flow restrictor 112. The flow restrictor 112 is configured to control the portion of the fuel recirculated towards the inlet 105 of the low-pressure fuel pump 106. The flow restrictor 112 is designed to ensure that a performance of the fuel pump 106 is not compromised upon incorporation of the flow restrictor 112, while ensuring that the gas turbine engine 10 receives a consistent and optimal fuel supply. As an example, the flow restrictor 112 may be in the form of an orifice. Further, the flow restrictor 112 is provided in the fuel recirculation line 110 between the first end 132 of the fuel recirculation line 110 and the second end 134 of the fuel recirculation line 110. In an example, the flow restrictor 112 has a minimum size greater than a maximum pore size of a filter media 120 (see **FIG. 3**) of the fuel filter 108. The flow restrictor 112 having the minimum size greater than the maximum pore size of the filter media 120 may ensure that the flow restrictor 112 does not get blocked or clogged. In some examples, the flow restrictor 112 may have a minimum size that is greater than 30 microns. The minimum size of the flow restrictor 112 may be decided to ensure that a performance of the fuel pump 106 is not compromised.

In an example, the flow restrictor 112 has the minimum size greater than a maximum likely particulate size within the fuel. The flow restrictor 112 having the minimum size greater than the maximum likely particulate size within the fuel may ensure that the flow restrictor 112 does not get blocked or clogged in the event that it is provided with unfiltered fuel. The maximum likely particulate size may be defined by a specification of the fuel contamination as defined by regulation, industry best practice and the airframer. The maximum likely particulate size may be defined by a specification of the fuel approved for use in the aircraft and the gas turbine engine. In some examples, the maximum likely particulate size within the fuel may be 1500 micrometres (0.0015 metres).

The fuel system 100 further includes the main engine fuel pump 114. In the illustrated example, the main engine fuel pump 114 is disposed downstream of the low-pressure fuel pump 106 and upstream of a fuel metering unit 116 of the fuel system 100. The main engine fuel pump 114 may raise a pressure of the fuel above a pressure of the combustion chamber 16 (see FIG. 1), such that fuel can be injected into the combustion chamber 16. In some examples, the fuel filter 108 may be disposed downstream of the main engine fuel pump 114. It should be noted that although the fuel recirculation line 110 is illustrated and explained in relation to the low-pressure fuel pump 106, in other examples, the fuel recirculation line 110 may be associated with the main engine fuel pump 114. Specifically, when the fuel filter 108 is disposed downstream of the main engine fuel pump 114, the fuel recirculation line 110 will be associated with the main engine fuel pump 114. In such examples, the fuel recirculation line 110 may recirculate some amount of fuel and/or water towards the main engine fuel pump 114 in a similar manner. Moreover, in such examples, the fuel supply line 104 may be configured to supply fuel to the main engine fuel pump 114.

In the illustrated example, the main engine fuel pump 114 receives the low-pressure fuel provided by the low-pressure fuel pump 106 and increases the pressure to required levels. The low-pressure fuel from the low-pressure fuel pump 106 is received by the fuel filter 108. Further, the filtered, low-pressure fuel from the fuel filter 108 is subsequently received by the main engine fuel pump 114. As an example, the main engine fuel pump 114 may be a positive displacement pump or a centrifugal pump. The positioning of the main engine fuel pump 114 downstream of the low-pressure fuel pump 106 and upstream of the fuel metering unit 116 may ensure a steady, a consistent, and an adequately pressurized fuel supply to the gas turbine engine 10, which may enhance fuel control, a combustion efficiency, and an overall engine performance. It may also provide safety benefits, reduce a risk of contamination and damage, and help improve the reliability, longevity, and the efficiency of the fuel system 100.

The fuel system 100 further includes the fuel metering unit 116 disposed downstream of the filter housing 118. The fuel metering unit 116 is configured to control the amount of fuel supplied to the combustion chamber 16. As an example, the fuel metering unit 116 may use inputs (such as temperature, pressure, and power demand) from various sensors or a controller to regulate fuel flow. As the fuel metering unit 116 may contain sensitive components, it is desirable that only filtered fuel is provided to the fuel metering unit 116. This may further lead to an efficient engine performance, an enhanced reliability, and a longer service life for critical fuel system components.

In some examples, a heat exchanger 111 may be disposed between the low-pressure fuel pump 106 and the fuel filter 108, between the fuel filter 108 and the main engine fuel pump 114, or between the main engine fuel pump 114 and the fuel metering unit 116, as per application requirement. In the illustrated example of **FIG. 2****,** the heat exchanger 111 is disposed between the low-pressure fuel pump 106 and the fuel filter 108. The heat exchanger 111 may be a fuel-oil heat exchanger. The fuel temperature change across the heat exchanger 111 may be dependent upon at least one parameter of both the fuel system 100 and the heat exchanger 111. For example, the parameter may be a flowrate of fuel through the heat exchanger 111, the parameter may be a flowrate of oil through the heat exchanger 111, and so on. Thus, the temperature of the fuel received by the fuel filter 108 may vary in dependence upon the temperature of fuel delivered from the heat exchanger 111, itself varying in dependence how the gas turbine engine 10 is operated.

**FIG. 3** shows a schematic view of the fuel filter 108 and the low-pressure fuel pump 106 of the gas turbine engine 10 (see **FIG. 1**)**.** The fuel filter 108 includes the filter housing 118. The filter housing 118 is an outer casing or structure of the fuel filter 108. As an example, the filter housing 118 may be made from a durable material, such as a metal, a composite, an alloy, or a high-strength plastic, to withstand the pressure and conditions within the fuel system 100. The filter housing 118 may be an elongated cylindrical structure having a top end 122, a bottom end 124, and a side wall 126 connecting the top end 122 from the bottom end 124. Further, the filter housing 118 has a fuel filter inlet 128 and the fuel filter outlet 130 through which the fuel flows in and out of the fuel filter 108, respectively. The fuel filter inlet 128 may be defined at the side wall 126 of the filter housing 118, while the fuel filter outlet 130 may be defined at the top end 122 of the filter housing 118. The fuel filter inlet 128, as shown in **FIG. 3****,** may be disposed substantially midway of the side wall 126. However, the fuel filter inlet 128 may be disposed at other positions on the side wall 126, without any limitations. The fuel filter inlet 128 may be disposed substantially perpendicular to the fuel filter outlet 130. Under normal operating conditions (e.g., level flight), the fuel filter outlet 130 is above the fuel filter inlet 128. This way, water that may separate from the fuel can pool under gravity at the bottom end 124 of the filter housing 118.

Further, the fuel filter 108 includes the filter media 120 disposed within the filter housing 118. The filter media 120 is configured to filter the fuel of solid contaminants. A side-effect of this is that it may additionally separate water and/or other unwanted liquid contaminants from the fuel. The filter media 120 may be concentrically disposed within the filter housing 118. In some examples, the filter media 120 may separate water that may settle at the bottom end 124 of the filter housing 118. It should be noted that a design of the fuel filter 108 as described herein is exemplary in nature. The fuel filter 108 may include any other design based on application requirements.

During an operation of the gas turbine engine 10, the low-pressure fuel pump 106 receives fuel from the fuel tank 102 via the fuel supply line 104. Further, the heat exchanger 111 is configured to receive the fuel from the low-pressure fuel pump 106. Furthermore, the fuel filter 108 is configured to receive the fuel from the heat exchanger 111 through the fuel filter inlet 128. Further, the fuel filter 108 directs filtered fuel towards the combustion chamber 16 (see **FIG. 1**) of the gas turbine engine 10 via the fuel filter outlet 130. Specifically, the filtered fuel from the fuel filter 108 is directed towards the main engine fuel pump 114 disposed downstream of the filter housing 118 and further towards the fuel metering unit 116 disposed downstream of the filter housing 118.

As disclosed above, some amount of fuel and/or water may be recirculated towards the low-pressure fuel pump 106 via the fuel recirculation line 110 based on the pressure difference between the fuel pressure in the filter housing 118 and the fuel supply line 104, to prevent accumulation of water in the filter housing 118. In some examples, the first end 132 of the fuel recirculation line 110 may be coupled with the low-pressure fuel pump 106. In another example, the first end 132 of the fuel recirculation line 110 may be coupled with the fuel supply line 104 proximal to the inlet 105 of the low-pressure fuel pump 106 (as shown in **FIG. 2****).** This feature may allow the recirculated fuel to mix with the incoming fuel being received from the fuel supply line 104.

Further, in an example, a second end 134 of the fuel recirculation line 110 is coupled with a location of the filter housing 118 that is proximal to a stagnant or quiescent fuel flow field within the filter housing 118. The term "stagnant or quiescent fuel flow field" may be defined as a flow field where the local velocity of the fuel is substantially zero. In some examples, the flow field may be stagnant/quiescent at certain low power conditions. In an example, the stagnant or quiescent fuel flow field within the filter housing 118 is downstream of the filter media 120 and upstream of the fuel filter outlet 130.

In an example, the second end 134 of the fuel recirculation line 110 is coupled with the filter housing 118 proximal to the bottom end 124 of the filter housing 118. The second end 134 of the fuel recirculation line 110 may be connected at a location where there is a risk of water accumulation. Typically, this may be at the lowest point of the filter housing 118. The fuel recirculation line 110 may prevent accumulation of fuel or water in the filter housing 118 as it is continually flushed.

It should be noted that a size of the fuel recirculation line 110 may be decided based on dimensions of the fuel filter 108, the low-pressure fuel pump 106, and/or the fuel supply line 104. Further, a size of the low-pressure fuel pump 106, and/or the fuel supply line 104 may be decided based on the portion of the fuel being recirculated by the fuel recirculation line 110.

It should be further noted that a design of the fuel system 110, an arrangement of components of the fuel system 100, and/or type of components associated with the fuel system 100 as described herein is exemplary in nature. The fuel system 100 may include any other design, arrangement of components, and/or type of components, based on, for example, a type of the gas turbine engine 10 or a requirement of the aircraft.

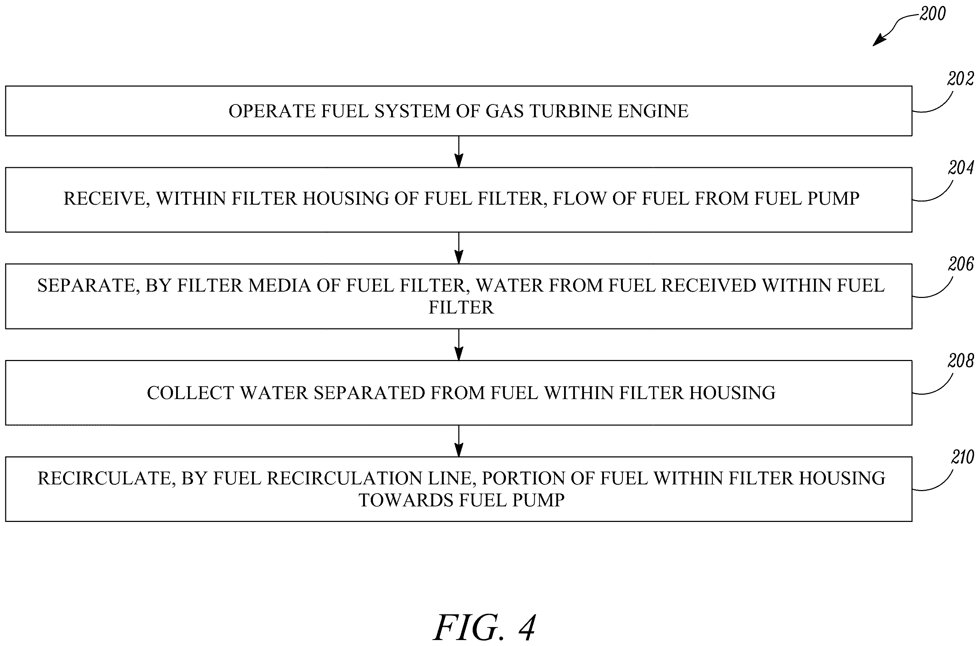

**FIG. 4** shows a flowchart depicting various steps of a method 200 of preventing a build-up of water within fuel filtered by the fuel filter 108 of the gas turbine engine 10 (see FIG. 1). Referring to **FIGS. 1** to **4****,** at step 202, the fuel system 100 of the gas turbine engine 10 is operated. The fuel system 100 includes the fuel pump 106, 114, the fuel supply line 104 configured to supply fuel to the fuel pump 106, 114, and the fuel filter 108 disposed downstream of the fuel pump 106, 114.

At step 204, the flow of fuel from the fuel pump 106, 114 is received within the filter housing 118 of the fuel filter 108. The fuel contains water. At step 206, water is separated from the fuel received within the fuel filter 108 by the filter media 120 of the fuel filter 108. At step 208, the water separated from the fuel is collected within the filter housing 118.

At step 210, the fuel recirculation line 110 that fluidly connects the fuel filter 108 with the fuel pump 106, 114 recirculates the portion of the fuel within the filter housing 118 towards the fuel pump 106, 114, based on the pressure difference between the fuel pressure in the filter housing 118 and the fuel supply line 104.

The method 200 further includes a step (not shown) at which the portion of the fuel recirculated towards the inlet 105 of the fuel pump 106, 114 is controlled by the flow restrictor 112 disposed in the fuel recirculation line 110.

The method 200 further includes a step (not shown) at which the fuel that is recirculated towards the fuel pump 106, 114 is caused to mix with the incoming fuel being received from the fuel supply line 104.

The method 200 further includes a step (not shown) at which the first end 132 of the fuel recirculation line 110 is coupled with the fuel pump 106, 114, or the fuel supply line 104 proximal to the inlet 105 of the fuel pump 106, 114.

The method 200 further includes a step (not shown) at which the second end 134 of the fuel recirculation line 110 is coupled with the location of the filter housing 118 that is proximal to the stagnant or quiescent fuel flow field within the filter housing 118. The stagnant or quiescent fuel flow field within the filter housing 118 is downstream of the filter media 120 and upstream of the fuel filter outlet 130.

The method 200 further includes a step (not shown) at which the second end 134 of the fuel recirculation line 110 is coupled with the filter housing 118 proximal to the bottom end 124 of the filter housing 118.

In the illustrated examples of **FIGS. 1** to **4****,** the fuel recirculation line 110 and the method 200 may advantageously prevent accumulation of water in the filter housing 118. The fuel recirculation line 110 and the method 200 may prevent water from accumulating at the bottom end 124 of the filter housing 118 by redirecting fuel accumulated within the filter housing 118 back into the fuel flow entering the low-pressure fuel pump 106, thereby effectively flushing out any fuel or water accumulated within the filter housing 118. Further, the fuel recirculation line 110 and the method 200 may also eliminate a requirement of regular maintenance action of checking for and/or draining water from the fuel filter 108. The recirculated fuel and/or water may mix with incoming fuel in the low-pressure fuel pump 106, rather than being directed back to the fuel tank 102.

The recirculation of the portion of the fuel may prevent a flushing of water downstream of the filter media 120 of the fuel filter 108. The recirculation of the portion of the fuel may mitigate against a build-up of water within the fuel filter 108, which may in turn reduce a risk of blockage in the downstream fuel system components due to formation of ice or slush if the temperature of the fuel comprising water reduces. Thus, in an event of a sudden reduction in fuel temperature to sub-zero, a risk of ice formation in components present downstream of the fuel filter 108 may be minimized, thereby preventing blockage of downstream components. Further, the recirculation of the portion of the fuel may prevent a reduction in engine power and may allow acceleration of the gas turbine engine 10 as needed. Furthermore, the recirculation of the portion of the fuel may reduce a probability of situations, such as "Loss of Thrust Control" (LOTC).

Various examples have been described, each of which comprise various combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A fuel system (100) for a gas turbine engine (10), the fuel system (100) comprising:
a fuel pump (106, 114);
a fuel supply line (104) configured to supply fuel to the fuel pump (106, 114);
a fuel filter (108) disposed downstream of the fuel pump (106, 114), wherein the fuel filter (108) includes a filter housing (118) and a filter media (120), wherein the fuel filter (108) is configured to receive a flow of fuel from the fuel pump (106, 114) and to deliver filtered fuel towards a combustion chamber (16) of the gas turbine engine (10) via a fuel filter outlet (130); and
a fuel recirculation line (110) that fluidly connects the fuel filter (108) with the fuel pump (106, 114), the fuel recirculation line (110) configured to recirculate a portion of the fuel received by the fuel filter (108) towards the fuel pump (106, 114) based on a pressure difference between a fuel pressure in the filter housing (118) and the fuel supply line (104).

2. The fuel system (100) of claim 1 further comprising a flow restrictor (112) disposed in the fuel recirculation line (110), wherein the flow restrictor (112) is configured to control the portion of the fuel recirculated towards an inlet (105) of the fuel pump (106, 114).

3. The fuel system (100) of claim 2, wherein the flow restrictor (112) has a minimum size greater than a maximum likely particulate size within the fuel.

4. The fuel system (100) of any preceding claim, wherein the fuel recirculation line (110) is a pipe.

5. The fuel system (100) of any preceding claim, wherein the fuel recirculated towards the fuel pump (106, 114) mixes with incoming fuel being received from the fuel supply line (104).

6. The fuel system (100) of any preceding claim, wherein a first end (132) of the fuel recirculation line (110) is coupled with the fuel pump (106, 114), or the fuel supply line (104) proximal to an inlet (105) of the fuel pump (106, 114) and a second end (134) of the fuel recirculation line (110) is coupled with a location of the filter housing (118) that is proximal to a stagnant or quiescent fuel flow field within the filter housing (118), the stagnant or quiescent fuel flow field within the filter housing (118) being downstream of the filter media (120) and upstream of the fuel filter outlet (130).

7. The fuel system (100) of claim 6, wherein the second end (134) of the fuel recirculation line (110) is coupled with the filter housing (118) proximal to a bottom end (124) of the filter housing (118).

8. The fuel system (100) of any preceding claim, wherein the fuel pump (106, 114) is a low-pressure fuel pump (106) or a main engine fuel pump (114) disposed downstream of the low-pressure fuel pump (106).

9. The fuel system (100) of any preceding claim, further comprising a fuel metering unit (116) disposed downstream of the filter housing (118).

10. The fuel system (100) of any preceding claim, wherein the fuel contains dissolved water and/or water droplets.

11. A method (200) of preventing a build-up of water within fuel filtered by a fuel filter (108) of a gas turbine engine (10), the method (200) comprising:
operating a fuel system (100) of the gas turbine engine (10), wherein the fuel system (100) includes a fuel pump (106, 114), a fuel supply line (104) configured to supply fuel to the fuel pump (106, 114), and the fuel filter (108) disposed downstream of the fuel pump (106, 114);
receiving, within a filter housing (118) of the fuel filter (108), a flow of fuel from the fuel pump (106, 114), wherein the fuel contains water;
separating, by a filter media (120) of the fuel filter (108), water from the fuel received within the fuel filter (108);
collecting the water separated from the fuel within the filter housing (118); and
recirculating, by a fuel recirculation line (110) that fluidly connects the fuel filter (108) with the fuel pump (106, 114), a portion of the fuel within the filter housing (118) towards the fuel pump (106, 114), based on a pressure difference between a fuel pressure in the filter housing (118) and the fuel supply line (104).

12. The method (200) of claim 11, further comprising controlling, by a flow restrictor (112) disposed in the fuel recirculation line (110), the portion of the fuel recirculated towards an inlet of the fuel pump (106, 114).

13. The method (200) of claim 11 or claim 12, further comprising causing the fuel that is recirculated towards the fuel pump (106, 114) to mix with incoming fuel being received from the fuel supply line (104).

14. The method (200) of any one of claims 11 to 13, further comprising coupling a first end (132) of the fuel recirculation line (110) with the fuel pump (106, 114), or the fuel supply line (104) proximal to an inlet (105) of the fuel pump (106, 114) and coupling a second end (134) of the fuel recirculation line (110) with a location of the filter housing (118) that is proximal to a stagnant or quiescent fuel flow field within the filter housing (118).

15. The method (200) of claim 14, further comprising coupling the second end (134) of the fuel recirculation line (110) with the filter housing (118) proximal to a bottom end (124) of the filter housing (118).
